# EUROPÄISCHE PATENTSCHRIFT

(11) **EP 4 396 468 B1**
(45) Veröffentlichungstag und Bekanntmachung des Hinweises auf die Patenterteilung: **04.03.2026**
(21) Anmeldenummer: 21772716.3
(22) Anmeldetag: 30.08.2021
(51) Int. Cl.: F16C 17/02, F16C 33/20, F16C 29/02

(54) **GLEITLAGERVERBUNDWERKSTOFF MIT EINER METALLISCHEN STÜTZSCHICHT**
PLAIN BEARING COMPOSITE MATERIAL HAVING A METAL SUPPORT LAYER
MATÉRIAU COMPOSITE DE PALIER LISSE AYANT UNE COUCHE DE SUPPORT MÉTALLIQUE

(43) Veröffentlichungstag der Anmeldung: 10.07.2024
(73) Patentinhaber: KS Gleitlager GmbH, 68789 St. Leon-Rot (DE)
(72) Erfinder: TAIPALUS, Riitta, 67117 Limburgerhof (DE); REINICKE, Rolf, 76669 Bad Schönborn (DE); WITT, Mario, 69115 Heidelberg (DE)
(74) Vertreter: DREISS Patentanwälte PartG mbB
(86) Internationale Anmeldenummer: PCT/EP2021/073858
(87) Internationale Veröffentlichungsnummer: WO 2023/030601

(56) Entgegenhaltungen:
- EP-A1- 3 819 514
- DE-A1- 102017 107 959

## Beschreibung

Die vorliegende Erfindung betrifft einen Gleitlagerverbundwerkstoff mit einer metallischen Stützschicht, einer darauf aufgebrachten porösen Trägerschicht, insbesondere aus Bronze, und mit einer eine Gleitfläche für einen Gleitpartner bildenden Gleitschicht aus einem Gleitschichtmaterial auf Polymerbasis, welches in die poröse Trägerschicht einimprägniert ist und einen die Gleitfläche bildenden Überstand über die poröse Trägerschicht bildet, wobei das Gleitschichtmaterial tribologisch wirksame Füllstoffe umfasst, wobei die Polymerbasis des Gleitschichtmaterials matrixbildendes PTFE und darin aufgenommenes PVDF umfasst.

EP 0 232 922 B1 offenbart einen Gleitlagerverbundwerkstoff mit Ausführungsbeispielen, bei denen das Gleitschichtmaterial 55 Vol.-% PTFE bzw. 60 Vol.-% PTFE bzw. 55 Vol.-% PVDF umfasst.

EP 0 632 208 B1 offenbart einen Gleitlagerverbundwerkstoff, wobei das Gleitschichtmaterial aus PTFE und 5-30 Vol.-% metallischem Füllstoff und 5-40 Vol.-% PVDF besteht. Ein Ausführungsbeispiel nennt 70 Vol.-% PTFE, 10 Vol.-% PVDF und 20 Vol.-% Blei.

EP 0 991 869 B1 offenbart einen Gleitlagerverbundwerkstoff mit einem Gleitschichtmaterial auf PTFE-Basis mit wenigstens 60 Vol.-% PTFE, 15-25 Vol.-% eines metallischen Füllstoffs und gegebenenfalls 8-12 Vol.-% PVDF und mit 1-3 Vol.-% Kohlenstofffasern. Das Gleitschichtmaterial ist ausgehend von einer PTFE-Dispersion hergestellt.

DE 10 2017 107 959 A1 offenbart einen Gleitlagerverbundwerkstoff mit einem Gleitschichtmaterial auf PTFE Basis und lehrt, dass die Füllstoffe mindestens ein Phosphat und mindestens ein Metallsulfid umfassen. Die Polymerbasis umfasst wenigstens 70 Vol.-%, insbesondere wenigstens 80 Vol.-%, insbesondere wenigstens 90 Vol.-% und vorzugsweise 100 Vol.-% PTFE. Entsprechend können bis zu 30 Vol.-%, insbesondere bis zu 20 Vol.-% bzw. bis zu 10 Vol.-% durch andere Polymere und Kombinationen daraus, wie insbesondere PVDF, PFA, FEP, ECTFE, EPTFE ersetzt sein.

EP 1 716 342 B1 offenbart einen Gleitlagerverbundwerkstoff, dessen Gleitschichtmaterial auf PVDF-Basis oder auf PES-Basis oder PPS-Basis oder PA-Basis beruht, wobei das Gleitschichtmaterial im ersten Fall wenigstens 50 Vol.-% PVDF umfasst. Als Füllstoffe sind Zinksulfid, Graphit und Kohlenstofffasern genannt. Die Ausführungsbeispiele offenbaren einen PTFE-Gehalt des Gleitschichtmaterials von 10 Vol-%, wobei PTFE hier als Festschmierstoff, also als Füllstoff der Polymerbasis fungiert. PTFE wird hier als pulverförmiger Füllstoff der Polymerbasis des Gleitschichtmaterials zugegeben.

EP 3 087 142 B1 offenbart einen Gleitlagerverbundwerkstoff, bei dem das Gleitschichtmaterial auf Basis eines thermoplastischen Polymers, insbesondere PVDF, PEEK, PPS oder andere gebildet ist. Der PTFE-Zusatz zu dem Gleitschichtmaterial beträgt zwischen 5 und 50 Vol.-%, insbesondere 15 - 45 Vol.-%, insbesondere 15-35 Vol.-% des Gleitschichtmaterials und weist wenigstens zwei verschiedene Arten von PTFE mit unterschiedlichen Molekulargewichten auf. Vorzugsweise besteht der PTFE-Zusatz zu 60-95 Vol.-% aus hochmolekularem PTFE und zu 5-40 Vol.-% aus niedermolekularem PTFE.

Man unterscheidet auf dem hier in Rede stehenden Gebiet zwischen verschiedenen Klassen von Gleitlagerverbundwerkstoffen. Man kennt zum einen Gleitlagerverbundwerkstoffe der hier in Rede stehenden Art, bei denen das Gleitschichtmaterial PTFE-basiert ist, die matrixbildende Polymerbasis also von PTFE gebildet ist. Solche Werkstoffe sind seit langem bekannt, und PTFE ist diejenige Polymerbasis, welche die geringsten Reibwerte überhaupt aufweist. Allerdings würde ein Gleitlagerverbundwerkstoff der hier in Rede stehenden Art mit einem aus 100% PTFE bestehenden Gleitschichtmaterial nicht den Verschleißfestigkeitsanforderungen der Praxis genügen können. Daher war man seit jeher bestrebt, ein PTFE-basiertes Gleitschichtmaterial mit verschleißmindernden Füllstoffen zu versehen. Hierbei besteht der Zielkonflikt, dass verschleißmindernde Füllstoffe wiederum den Reibwert, insbesondere den Haftreibungswert, auf mitunter nicht akzeptable Größe erhöhen.

Im Stand der Technik sind aber andererseits auch Gleitlagerverbundwerkstoffe bekannt, bei denen das Gleitschichtmaterial aus einem tragenden, meist thermoplastischen Polymer, insbesondere PVDF, PEEK u.a., als Basis gebildet ist. Derartige Gleitlagerverbundwerkstoffe haben zwar, insbesondere unter Beifügung tribologisch wirksamer Füllstoffe, mitunter eine sehr gute Verschleißbeständigkeit, jedoch ist ihr Reibwert für viele Anwendungen zu hoch.

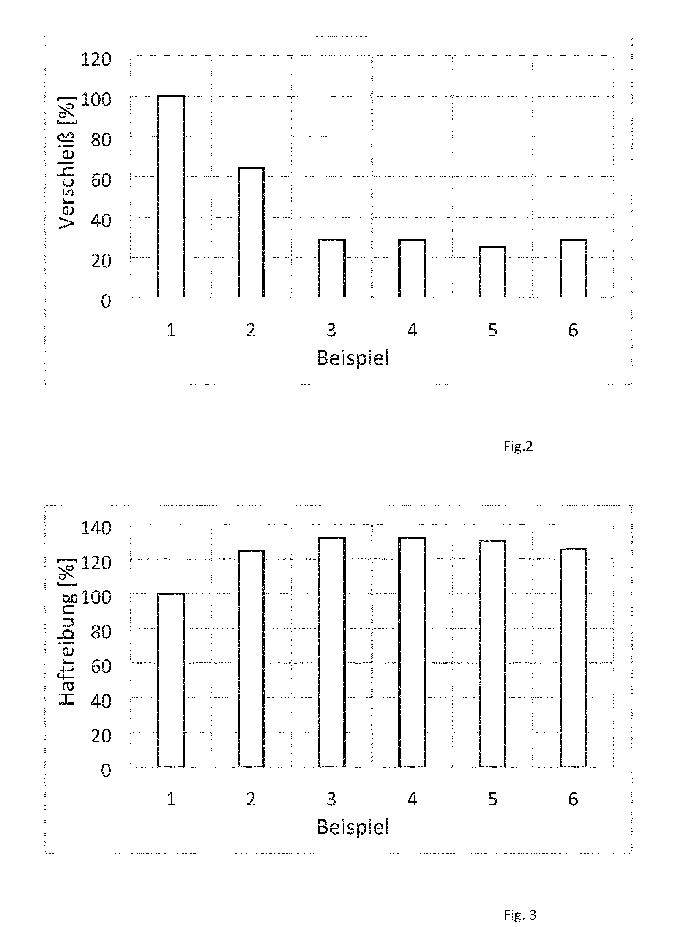

Im Zuge der Produktentwicklung kommt - wie die Erfahrung zeigt - erschwerend hinzu, dass sich die Gleitschichtmaterialien in der Regel nicht in einfach vorherbestimmbarer Weise konzipieren lassen, sondern dass es sehr häufig zu unerwarteten und unerwartbaren Ergebnissen und Eigenschaften der konzipierten Werkstoffe kommt. So führt beispielsweise die Erhöhung eines PTFE-Füllstoffgehalts von 10 auf 30 Vol.-% ausgehend von einem 77 Vol.-% umfassenden PVDF-Basis-Gleitschichtmaterial nicht wie erwartet zu einer Reduzierung, sondern zu einer deutlichen Erhöhung des Reibwerts. Andererseits ist es schwer nachvollziehbar, dass ausgehend von einem anderen PTFE-Basiswerkstoff mit 75 Vol.-% PTFE, 5 Vol.-% PFA, 17 Vol.-% ZnS und 3 Vol.-% Kohlenstofffasern die Reduzierung des PTFE-Gehalts auf 60 Vol.-% und die Zugabe von 20 Vol.-% PVDF und 20 Vol.-% Blei (anstelle der vorstehenden Füllstoffe) zu einer über 30%-igen Erhöhung des Verschleißes geführt hat. Andererseits war bei einem Gleitschichtmaterial mit wiederum 60 Vol.-% PTFE und mit 40 Vol.-% PVDF der Verschleiß um fast 40 % reduziert, wenn auch unter Erhöhung des Haftreibungswerts (siehe Tabelle und Messwerte in Figuren 2, 3).

Der vorliegenden Erfindung liegt die Aufgabe zugrunde, einen gattungsgemäßen Gleitlagerverbundwerkstoff noch weitergehend im Hinblick auf seine tribologischen Eigenschaften, nämlich Reibung und Verschleiß, zu verbessern.

Diese Aufgabe wird bei einem Gleitlagerverbundwerkstoff der genannten Art erfindungsgemäß dadurch gelöst, dass das Gleitschichtmaterial wenigstens 50,0 Vol.% PTFE und wenigstens 23,0 Vol.-% jedoch weniger als 40,0 Vol.-% PVDF und 8,0 - 25,0 Vol.-% Metallsulfid mit einer Schichtstruktur als Füllstoff umfasst.

Mit der vorliegenden Erfindung sollte also ein Gleitlagerverbundwerkstoff der in Rede stehenden Art im Hinblick auf den vorstehend geschilderten Zielkonflikt im Hinblick auf den Einsatz von PTFE und PVDF noch weitergehend optimiert werden. Mit der vorliegenden Erfindung wurde festgestellt, dass sich ein Gleitschichtmaterial mit PTFE als matrixbildendem Polymermaterial und mit PVDF und mit einem Metallsulfid mit Schichtstruktur mit der beanspruchten Zusammensetzung als besonders vorteilhaft im Hinblick auf einen geringen Verschleiß bei durchaus noch akzeptabler Haftreibung erweist. Mit der beanspruchten Zusammensetzung konnte der Verschleiß gegenüber dem eingangs genannten PTFE-Basiswerkstoff mit 75 Vol.-% PTFE, aber auch gegenüber dem ebenfalls schon erwähnten Werkstoff mit 60 Vol.-% PTFE und 40 Vol.-% PVDF erheblich reduziert werden. Die Haftreibung blieb ungefähr im Bereich der Haftreibung dieses Werkstoffs mit 60 Vol.-% PTFE und 40 Vol.-% PVDF, was ebenfalls nicht ohne Weiteres zu erwarten war.

Es wird diesseits davon ausgegangen, dass die gleichzeitig moderate Haftreibung und die sehr hohe Verschleißfestigkeit, also der sehr geringe Verschleiß, des erfindungsgemäßen Werkstoffs mit einer matrixbildenden PTFE-Basis und mit PVDF sowie einem Metallsulfid mit Schichtstruktur als Füllstoff in der beanspruchten Zusammensetzung durch das hierdurch gebildete einzigartige Werkstoffgefüge des Gleitschichtmaterials bedingt ist. Dieses Werkstoffgefüge ist nach diesseitiger Annahme zumindest oberhalb der porösen Trägerschicht, also innerhalb eines Überstands des Gleitschichtmaterials über die poröse Trägerschicht, durch eine parallele Anordnung von netzartigen PTFE-Strukturen und darin eingebundenen PVDF-Partikeln und Metallsulfidteilchen mit Schichtgitterstruktur bestimmt. Durch das typischerweise erfolgende Einwalzen des Gleitschichtmaterials werden die netzartigen PTFE-Strukturen und die Schichten der Metallsulfidteilchen ungefähr parallel zueinander ausgerichtet. Dies erleichtert das Gleiten von Schichten gegeneinander ohne wesentlichen Widerstand. Metallsulfide mit Schichtstruktur, insbesondere das besonders bevorzugte Molybdändisulfid (MoS₂), bilden nämlich übereinander leicht verschiebliche Lamellen. Die einzelnen Schichten des Molybdändisulfids bestehen aus Molybdänatomen in einer Schicht und aus Schwefelatomen in einer angrenzenden Schicht. Die Schwefel-an-Molybdän-Bindung ist sehr stark, während die Schwefel-an-Schwefel-Bindung im Vergleich dazu sehr schwach ist. Auf diese Weise gleiten Schichten oder Lamellen übereinander, was für die innere Gleitfähigkeit des Gleitschichtmaterials von großer Bedeutung ist. Ebenso bilden die in derselben Gleitebene erstreckten radial vorstehenden Fluoratome des netzartigen PTFE ebensolche Gleitebenen, welche PVDF naturgemäß nicht anbieten kann, da hier sogar alternierende Fluor- und Wasserstoffatome zur Ausbildung von die Haftreibung erhöhenden Wasserstoffbrückenbindungen führen können. Allerdings vermag wiederum das PVDF den Verschleiß zu verringern, aber eben nur im Zusammenwirken mit dem Metallsulfid mit Schichtstruktur.

In Weiterbildung der Erfindung erweist es sich als vorteilhaft, wenn das Gleitschichtmaterial wenigstens 52,0 Vol.-%, insbesondere wenigstens 54,0 Vol.-%, insbesondere höchstens 70 Vol.-%, insbesondere höchstens 65 Vol.-%, insbesondere höchstens 62 Vol.-% PTFE umfasst.

Weiter erweist es sich als vorteilhaft, wenn das Gleitschichtmaterial höchstens 39,0 Vol.-%, insbesondere höchstens 38,0 Vol.-%, insbesondere höchstens 37,0 Vol.-%, insbesondere höchstens 36,0 Vol.-% PVDF umfasst.

Es erweist sich weiter als vorteilhaft, wenn das Gleitschichtmaterial wenigstens 9 Vol.-%, insbesondere wenigstens 12 Vol.-%, insbesondere höchstens 23 Vol.-%, insbesondere höchstens 21 Vol.-% Metallsulfid mit einer Schichtstruktur als Füllstoff umfasst.

Als Metallsulfid mit Schichtstruktur kommen Molybdändisulfid (MoS₂), Wolframdisulfid (WS₂), Zinndisulfid (SnS₂), Bismutsulfid (Bi₂S₃) in Frage.

Im Hinblick auf eine noch weitergehende Optimierung der tribologischen Eigenschaften erweist es sich als vorteilhaft, wenn das Gleitschichtmaterial neben Metallsulfid in Summe wenigstens 0,2 Vol.-%, insbesondere wenigstens 0,5 Vol.-%, insbesondere wenigstens 1,0 Vol.-%, insbesondere wenigstens 2 Vol.-%, insbesondere höchstens 10 Vol.-%, insbesondere höchstens 8 Vol.-%, insbesondere höchstens 5 Vol.-% weitere tribologisch wirksame Füllstoffe umfasst. Insbesondere kommen als weitere tribologisch wirkende Füllstoffe (BaSO₄) und/oder Pigmente, wie TiO₂, und/oder hexagonales Bornitrid (BN), Calciumdifluorid (CaF₂), Calciumphosphate, Aramid und Polyimid (PI) und/oder Fasern, insbesondere Kohlenstofffasern, in Frage.

Es erweist sich weiter als vorteilhaft, wenn das Gleitschichtmaterial aus den Komponenten PTFE, PVDF und Metallsulfid mit Schichtstruktur, vorzugsweise MoS₂, gebildet ist, d.h. hieraus besteht. Bei einer anderen Ausführungsform können neben diesen drei Komponenten höchstens 10 Vol.-% weitere tribologisch wirksame Füllstoffe der vorstehend genannten Art enthalten sein.

Es erweist sich als vorteilhaft, wenn der die Gleitfläche bildende Überstand des Gleitschichtmaterials über die poröse Trägerschicht ein Dicke von wenigstens 5 µm, insbesondere von wenigstens 10 µm, insbesondere von wenigstens 15 µm, insbesondere von wenigstens 20 µm und von höchstens 60 µm, insbesondere von höchstens 50 µm, insbesondere von höchstens 45 µm aufweist.

Als erfindungsgemäß wird auch angesehen ein Gleitlagerelement, insbesondere eine gerollte Buchse oder Bundbuchse, insbesondere als Gleitlagerelement in einer Sitzverstellvorrichtung eines Kraftfahrzeugs, hergestellt aus einem erfindungsgemäßen Gleitlagerverbundwerkstoff.

Außerdem wird als erfindungsgemäß wird angesehen die Verwendung eines erfindungsgemäßen Gleitlagerverbundwerkstoffs zur Herstellung eines Gleitlagerelements für eine Sitzverstellvorrichtung eines Kraftfahrzeugs.

Des Weiteren wird Schutz in Anspruch genommen für eine Gleitlageranordnung umfassend ein buchsenförmiges oder bundbuchsenförmiges Gleitlagerelement, hergestellt aus einem Gleitlagerverbundwerkstoff, und ein darin gelagertes metallisches Wellen- oder Zapfenelement mit einer Oberflächenrauheit R₂ von 0,5 - 4,0 µm, insbesondere von 1,0 - 3,0 µm, insbesondere von 1,0 - 2,0 µm. Es hat sich nämlich als wesentlich erwiesen, dass eine geeignete Rauheit des metallischen und typischerweise aus Stahl bestehenden Wellen- oder Zapfenelements für die Ausbildung eines dünnen Transferfilms des Gleitschichtmaterials maßgeblich verantwortlich ist. Durch einen solchen Transferfilm auf der Welle oder dem Zapfenelement kann sich dann der erfindungsgemäße Verbundwerkstoff und dessen Gleitschichtmaterial im Betrieb besonders verschleißmindernd auswirken.

Weitere Merkmale, Einzelheiten und Vorteile der Erfindung ergeben sich aus den beigefügten Patentansprüchen und aus der zeichnerischen Darstellung und nachfolgenden Beschreibung bevorzugter Ausführungsformen der Erfindung.

In der Zeichnung zeigt:
- Figur 1: eine schematische Schnittansicht eines erfindungsgemäßen Gleitlagerverbundwerkstoffs;
- Figur 2: Ergebnisse einer Verschleißmessung;
- Figur 3: Ergebnisse einer Haftreibungsmessung; und
- Figur 4: eine schematische Darstellung einer Prüfanordnung

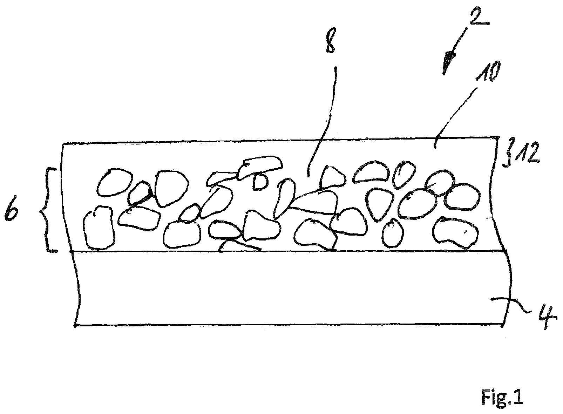

Figur 1 zeigt einen insgesamt mit dem Bezugszeichen 2 bezeichneten Gleitlagerverbundwerkstoff mit einer metallischen Stützschicht 4 aus Stahl und einer metallischen porösen Trägerschicht 6, insbesondere aus Bronze, die ein Porenvolumen bezogen auf das Volumen der Trägerschicht von vorzugsweise wenigstens 20 Vol-%, insbesondere wenigstens 30 Vol.-% insbesondere wenigstens 35 Vol.-%, insbesondere wenigstens 40 Vol.-% begrenzt. In die Poren der porösen Trägerschicht 6 ist ein Gleitschichtmaterial 8 auf Polymerbasis eingebracht, welches nicht nur die Poren der Trägerschicht 6 vorzugsweise vollständig ausfüllt, sondern auch einen eine Gleitschicht 10 bildenden Überstand 12 über der porösen Trägerschicht 6 bildet.

Die Herstellung des in Figur 1 schematisch dargestellten Gleitlagerverbundwerkstoffs 2 erfolgt, indem einer PTFE-Dispersion PVDF-Partikel und Metallsulfidpartikel in der beanspruchten Zusammensetzung (vgl. Anspruch 1) sowie gegebenenfalls weitere Füllstoffe der eingangs genannten Art zugesetzt werden. Diese Dispersion wird dann ausgefällt und eine flüssige Phase der Dispersion abgetrennt, wodurch ein pastöses Medium gebildet wird. Dieses das Gleitschichtmaterial 8 bildende pastöse Medium wird bei Raumtemperatur in die dreidimensional poröse Trägerschicht 6 eingewalzt, wodurch es zur Ausbildung und Ausrichtung der eingangs beschriebenen Strukturen kommt. Der so erhaltene Werkstoff wird dann ausgesintert bei Temperaturen von etwa 350 bis 420°C, also in der dreidimensional porösen Trägerschicht 6 thermisch fixiert, so dass die beanspruchte Zusammensetzung des Gleitschichtmaterials 8 resultiert. Dabei werden auch eine noch enthaltene Restfeuchte und Rückstände von Benetzungsmitteln verdampft.

Die nachfolgende Tabelle zeigt erfindungsgemäße Zusammensetzungen des Gleitschichtmaterials (Beispiele 3 - 6) zur Herstellung eines erfindungsgemäßen Gleitlagerverbundwerkstoffs und Vergleichsbeispiele hierzu (Beispiele 1, 2).

**Tabelle 1 - Ausführungsbeispiele**

| **Beispiel** | **Matrix [Vol.-%]** | **Füllstoff [Vol.-%]** | | | | |
|---|---|---|---|---|---|---|
| | **PTFE** | **PFA** | **ZnS** | **CF** | **PVDF** | **MoS2** |
| **1** | **75** | **5** | **17** | **3** | | |
| **2** | **60** | | | | **40** | |
| **3** | **55** | | | | **35** | **10** |
| **4** | **50** | | | | **35** | **15** |
| **5** | **60** | | | | **25** | **15** |
| **6** | **55** | | | | **25** | **20** |

Im Zuge der vorstehend kurz beschriebenen Herstellung des Gleitlagerverbundwerkstoffs werden streifenförmige Flachmaterialien erhalten, die auch in einem Endlosprozess aufgewickelt werden können. Von diesen werden Platinenabschnitte abgetrennt und hieraus in einem Biegerollverfahren zylindrische Buchsen mit einer Stoßfuge hergestellt, die dann wie nachfolgend beschrieben getestet werden.

### Beschreibung der Prüfung:

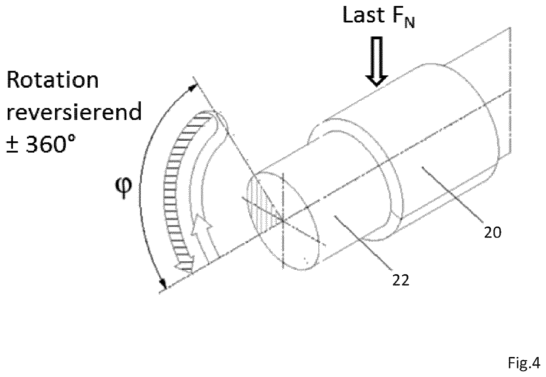

Der Verschleiß der Gleitlagerbuchsen 20 wurde in einem fettgeschmierten Lauf mit reversierender Rotationsbewegung mit mittlerer Geschwindigkeit von 0,054 m/s in einer in Figur 4 skizzierten Prüfanordnung getestet. Hierbei rotiert ein in der Buchse 20 aufgenommener wellenförmiger Gegenkörper 22 nicht kontinuierlich, sondern er wird abwechselnd um +/- 360° in Umfangsrichtung der Buchse hin und her rotiert. Zwischen den Umkehrpunkten liegen also in Umfangsrichtung 720°. Dabei wird die Gleitlagerbuchse 20 in radialer Richtung unter einer Federvorspannung mit einer Kraft F_{N} von 1680 N belastet. Die Buchse 20 hat dabei einen Außendurchmesser von 42 mm und eine Buchsenbreite von 8 mm. Der wellenförmige Gegenkörper ist aus Edelstahl C67S (DIN EN 10132).

Die Buchsen 20 bzw. buchsenförmigen Gleitlagerelemente mit Gleitschichtmaterial gemäß Tabelle 1 wurden unter jeweils gleichen Bedingungen getestet. Für die Verschleißmessung wurde der vorstehende reversierende Rotationsbetrieb über 20 Stunden ausgeführt, und es wurde dann der jeweilige Verschleiß des Gleitschichtmaterials an der Buchseninnenseite gemessen und in der Figur 2 in relativen Einheiten aufgetragen.

Für die Messung der Haftreibung wurde eine jeweilige Buchse 20 der obigen Abmessung bzw. das jeweilige buchsenförmige Gleitlagerelement innerhalb des Prüfstands im Stillstand, d.h. statisch, mit einer vorgegebenen Last F_{N} von 750 N für 20 Minuten beaufschlagt. Im Anschluss hieran wurde eine Reibwertmessung mittels Drehmomenterfassung unter derselben bleibenden Belastung ausgeführt und aufgezeichnet. Dabei wird der wellenförmige Gegenkörper 22 wiederum um +/-360° hin- und her rotiert und dabei natürlich immer wieder an den Umkehrpunkten kurz zum Stillstand gebracht. Dieser Rotationsbetrieb wurde über 20 Minuten ausgeführt und dabei Drehmomentdaten aufgezeichnet. Danach werden die aufgezeichneten Drehmomentdaten jeweils nur im Bereich der Umkehrpunkte berücksichtigt, so dass deren mittlerer Wert die Haftreibung zeigt. Die Ergebnisse sind wiederum in relativen Einheiten in Figur 3 aufgetragen.

Die erfindungsgemäßen Gleitlagerverbundwerkstoffe mit PTFE-Basis-Gleitschichtmaterialien gemäß Nummern 3 bis 6 zeigen unter den vorliegenden Prüfbedingungen ein noch hinreichend zufriedenstellendes Haftreibungsverhalten, obschon wesentliche Anteile an PVDF enthalten sind. Bei diesen PTFE-Basis-Gleitschichtmaterialien dienen die in der Tabelle 1 aufgeführten Füllstoffe nicht primär zur Reduzierung des Reibwerts, sondern in erster Linie zur Erhöhung der Verschleißbeständigkeit.

Bei einem reinen zu 100% aus PTFE bestehenden Gleitschichtmaterial wären - wie eingangs schon erwähnt - der Reibwert und insbesondere die Haftreibung geringer als bei den Werkstoffen gemäß Nr. 3 bis 6. Sie wären für Anwendungen, bei denen ein gutes "Slip/Stick"-Verhalten, also ein geringer Unterschied zwischen Haftreibung und Gleitreibung gefordert ist, am besten geeignet; jedoch wäre der Haftreibwert von 100 % PTFE für eine häufig geforderte Selbsthemmung, z.B. in Sitzverstellvorrichtungen, zu gering. Die erfindungsgemäßen Werkstoffe gemäß Nr. 3 - 6 haben hinreichend gutes "Slip/Stick"-Verhalten und eine hinreichende Selbsthemmung, die sie gerade für die Verwendung zur Herstellung von Gleitlagerelementen für Sitzverstellvorrichtungen geeignet erscheinen lassen.

Bei einem PTFE-Basiswerkstoff führt die Zugabe von Füllstoffen, zu einer Erhöhung der Haftreibung und hoffentlich zu einer Verbesserung der Verschleißfestigkeit verglichen zum reinen PTFE-Gleitschichtmaterial. Trotz der Zugabe verschleißmindernder Füllstoffe wie bei Beispielen Nr. 1 und 2 ist die Verschleißbeständigkeit aber für viele Anwendungen nicht hinreichend.

Jedoch zeigten die erfindungsgemäßen Beispiele Nummern 3 bis 6 mit PTFE, PVDF und MoS₂ eine hervorragende Verschleißfestigkeit mit gegenüber den Vergleichsbeispielen Nummer 1 und 2 wesentlich reduziertem Verschleiß bei gleichwohl akzeptierbarer Haftreibung.

Der erfindungsgemäße Gleitlagerverbundwerkstoff gemäß den Beispielen Nummern 3 bis 6 erweist sich als gut geeignet zur Herstellung von Gleitlagerelementen in Form von gerollten Buchsen und Bundbuchsen, insbesondere zur Verwendung in Sitzverstellvorrichtungen, insbesondere bei Kraftfahrzeugen, Hier können durch Stick-Slip typischerweise unerwünschte Geräusche entstehen, die aber bei Verwendung des erfindungsgemäßen Gleitlagerverbundwerkstoffs nicht oder in geringerem Umfang auftreten.

## Patentansprüche

1. Gleitlagerverbundwerkstoff (2) mit einer metallischen Stützschicht (4), einer darauf aufgebrachten porösen Trägerschicht (6), insbesondere aus Bronze, und mit einer eine Gleitfläche für einen Gleitpartner bildenden Gleitschicht (10) aus einem Gleitschichtmaterial (8) auf Polymerbasis, welches in die poröse Trägerschicht (6) einimprägniert ist und einen die Gleitfläche bildenden Überstand (12) über die poröse Trägerschicht (6) bildet, wobei das Gleitschichtmaterial (8) tribologisch wirksame Füllstoffe umfasst, wobei die Polymerbasis des Gleitschichtmaterials (8) matrixbildendes PTFE und darin aufgenommenes PVDF umfasst, **dadurch gekennzeichnet,**
**dass** das Gleitschichtmaterial (8) wenigstens 50,0 Vol.% PTFE und wenigstens 23,0 jedoch weniger als 40,0 Vol.-% PVDF und 8,0 - 25,0 Vol.-% Metallsulfid mit einer Schichtstruktur als Füllstoff umfasst und dass das Verhältnis des volumenprozentualen Anteils von PVDF zum volumenprozentualen Anteil des Metallsulfids zwischen 1,0 und 4,0 liegt.

2. Gleitlagerverbundwerkstoff nach Anspruch 1, **dadurch gekennzeichnet, dass** das Gleitschichtmaterial (8) wenigstens 52,0 Vol.-%, insbesondere wenigstens 54,0 Vol.-%, insbesondere höchstens 70 Vol.-%, insbesondere höchstens 65 Vol.-%, insbesondere höchstens 62 Vol.-% PTFE umfasst.

3. Gleitlagerverbundwerkstoff nach Anspruch 1 oder 2, **dadurch gekennzeichnet, dass** das Gleitschichtmaterial (8) höchstens 39,0 Vol.-%, insbesondere höchstens 38,0 Vol.-%, insbesondere höchstens 37,0 Vol.-%, insbesondere höchstens 36,0 Vol.-% PVDF umfasst.

4. Gleitlagerverbundwerkstoff nach Anspruch 1, 2 oder 3, **dadurch gekennzeichnet, dass** das Gleitschichtmaterial wenigstens 9 Vol.-%, insbesondere wenigstens 12 Vol.-%, insbesondere höchstens 23 Vol.-%, insbesondere höchstens 21 Vol.-% Metallsulfid mit einer Schichtstruktur als Füllstoff umfasst.

5. Gleitlagerverbundwerkstoff nach einem oder mehreren der vorstehenden Ansprüche, **dadurch gekennzeichnet, dass** das Verhältnis des volumenprozentualen Anteils von PVDF zum volumenprozentualen Anteil des Metallsulfids wenigstens 1,1, insbesondere wenigstens 1,2 und insbesondere höchstens 3,8, insbesondere höchstens 3,6 beträgt.

6. Gleitlagerverbundwerkstoff nach einem oder mehreren der vorstehenden Ansprüche, **dadurch gekennzeichnet, dass** das Metallsulfid Molybdändisulfid (MoS₂), Wolframdisulfid (WS₂), Zinndisulfid (SnS₂), Bismutsulfid (Bi₂S₃) umfasst.

7. Gleitlagerverbundwerkstoff nach einem oder mehreren der vorstehenden Ansprüche, **dadurch gekennzeichnet, dass** das Gleitschichtmaterial (8) neben Metallsulfid in Summe wenigstens 0,2 Vol.-%, insbesondere wenigstens 0,5 Vol.-%, insbesondere wenigstens 1,0 Vol.-%, insbesondere wenigstens 2 Vol.-%, insbesondere höchstens 10 Vol.-%, insbesondere höchstens 8 Vol.-%, insbesondere höchstens 5 Vol.-% weitere tribologisch wirksame Füllstoffe umfasst.

8. Gleitlagerverbundwerkstoff nach Anspruch 7, **dadurch gekennzeichnet, dass** als weitere tribologisch wirksame Füllstoffe Bariumsulfat (BaSO₄) und/oder Pigmente, wie TiO₂, und/oder hexagonales Bornitrid (BN), Calciumdifluorid (CaF₂), Aramid und Polyimid (PI) und/oder Fasern, insbesondere Kohlenstofffasern, umfasst sind.

9. Gleitlagerverbundwerkstoff nach einem oder mehreren der vorstehenden Ansprüche, **dadurch gekennzeichnet, dass** das Gleitschichtmaterial (8) aus den Komponenten PTFE, PVDF, Metallsulfid, insbesondere MoS₂, gebildet ist, oder dass das Gleitschichtmaterial (8) aus den Komponenten PTFE, PVDF, Metallsulfid, insbesondere MoS₂, und höchstens 10 Vol.-%, insbesondere höchstens 8 Vol.-%, insbesondere höchstens 6 Vol.-% weiteren tribologisch wirksamen Füllstoffen nach Anspruch 8 gebildet ist.

10. Gleitlagerverbundwerkstoff nach einem oder mehreren der vorstehenden Ansprüche, **dadurch gekennzeichnet, dass** der die Gleitfläche bildende Überstand (12) des Gleitschichtmaterials (8) über die poröse Trägerschicht (6) eine Dicke von wenigstens 5 µm, insbesondere von wenigstens 10 µm, insbesondere von wenigstens 15 µm, insbesondere von wenigstens 20 µm und von höchstens 60 µm, insbesondere von höchstens 50 µm, insbesondere von höchstens 45 µm aufweist.

11. Gleitlagerelement, insbesondere gerollte Buchse oder Bundbuchse, insbesondere als Gleitlagerelement in einer Sitzverstellvorrichtung eines Kraftfahrzeugs, hergestellt aus einem Gleitlagerverbundwerkstoff (2) nach einem oder mehreren der Ansprüche 1-10.

12. Gleitlageranordnung umfassend ein buchsenförmiges oder bundbuchsenförmiges Gleitlagerelement nach Anspruch 11 und ein darin gelagertes metallisches Wellen- oder Zapfenelement mit einer Oberflächenrauheit R₂ von 0,5 - 4,0 µm, insbesondere von 1,0 - 3,0 µm, insbesondere von 1,0 - 2,0 µm.

## Claims

1. Plain bearing composite material (2) having a metal support layer (4), a porous backing layer (6) applied thereto, in particular made of bronze, and having a sliding layer (10) that forms a sliding surface for a sliding partner, which sliding layer is made of a polymer-based sliding layer material (8) which is impregnated into the porous backing layer (6) and forms, over the porous backing layer (6), a protrusion (12) that forms the sliding surface, the sliding layer material (8) comprising tribologically active fillers, the polymer base of the sliding layer material (8) comprising matrix-forming PTFE and PVDF incorporated therein, **characterized in**
**that**, as a filler, the sliding layer material (8) comprises at least 50.0 vol.% PTFE and at least 23.0 but less than 40.0 vol.% PVDF and 8.0 - 25.0 vol.% metal sulfide having a layer structure, and in that the ratio of the volume percent proportion of PVDF to the volume percent proportion of metal sulfide is between 1.0 and 4.0.

2. Plain bearing composite material according to claim 1, **characterized in that** the sliding layer material (8) comprises at least 52.0 vol.%, in particular at least 54.0 vol.%, in particular at most 70 vol.%, in particular at most 65 vol.%, in particular at most 62 vol.% PTFE.

3. Plain bearing composite material according to claim 1 or 2, **characterized in that** the sliding layer material (8) comprises at most 39.0 vol.%, in particular at most 38.0 vol.%, in particular at most 37.0 vol.%, in particular at most 36.0 vol.% PVDF.

4. Plain bearing composite material according to claim 1, 2 or 3, **characterized in that**, as a filler, the sliding layer material comprises at least 9 vol.%, in particular at least 12 vol.%, in particular at most 23 vol.%, in particular at most 21 vol.% metal sulfide having a layer structure.

5. Plain bearing composite material according to one or more of the preceding claims, **characterized in that** the ratio of the volume percent proportion of PVDF to the volume percent proportion of the metal sulfide is at least 1.1, in particular at least 1.2 and in particular at most 3.8, in particular at most 3.6.

6. Plain bearing composite material according to one or more of the preceding claims, **characterized in that** the metal sulfide comprises molybdenum disulfide (MoS₂), tungsten disulfide (WS₂), tin disulfide (SnS₂), bismuth sulfide (Bi₂S₃) .

7. Plain bearing composite material according to one or more of the preceding claims, **characterized in that** the sliding layer material (8) comprises, in addition to metal sulfide, in total at least 0.2 vol.%, in particular at least 0.5 vol.%, in particular at least 1.0 vol.%, in particular at least 2 vol.%, in particular at most 10 vol.%, in particular at most 8 vol.%, in particular at most 5 vol.% further tribologically active fillers.

8. Plain bearing composite material according to claim 7, **characterized in that** barium sulfate (BaSO₄) and/or pigments, such as TiO₂, and/or hexagonal boron nitride (BN), calcium difluoride (CaF₂), aramid and polyimide (PI) and/or fibers, in particular carbon fibers, are comprised as further tribologically active fillers.

9. Plain bearing composite material according to one or more of the preceding claims, **characterized in that** the sliding layer material (8) is formed from the components PTFE, PVDF, metal sulfide, in particular MoS₂, or **in that** the sliding layer material (8) is formed from the components PTFE, PVDF, metal sulfide, in particular MoS₂, and from at most 10 vol.%, in particular at most 8 vol.%, in particular at most 6 vol.% further tribologically active fillers according to claim 8.

10. Plain bearing composite material according to one or more of the preceding claims, **characterized in that** the sliding-surface-forming protrusion (12) of the sliding layer material (8) has, over the porous carrier layer (6), a thickness of at least 5 µm, in particular at least 10 µm, in particular at least 15 µm, in particular at least 20 µm and at most 60 µm, in particular at most 50 µm, in particular at most 45 µm.

11. Plain bearing element, in particular a wrapped bush or flanged bush, in particular as a plain bearing element in a seat adjustment device of a motor vehicle, made from a plain bearing composite material (2) according to one or more of claims 1-10.

12. Plain bearing arrangement comprising a bush-shaped or flanged-bush-shaped plain bearing element according to claim 11 and a metal shaft or pin element mounted therein having a surface roughness R_{Z} from 0.5 - 4.0 µm, in particular from 1.0 - 3.0 µm, in particular from 1.0 - 2.0 µm.

## Revendications

1. Matériau composite pour palier lisse (2) comprenant une couche de support métallique (4), une couche porteuse poreuse (6) appliquée sur celle-ci, en particulier en bronze, ainsi qu'une couche de glissement (10) formant une surface de glissement pour un partenaire de glissement, et constituée d'un matériau de couche de glissement (8) à base de polymère qui est imprégné dans la couche porteuse poreuse (6) et qui forme une saillie (12) sur ladite couche porteuse poreuse (6), laquelle forme la surface de glissement, dans lequel ledit matériau de couche de glissement (8) comprend des charges tribologiquement actives, dans lequel la base de polymère du matériau de couche de glissement (8) comprend du PTFE formant la matrice et du PVDF y reçu, **caractérisé en ce que**
le matériau de couche de glissement (8) comprend au moins 50,0 % en volume de PTFE et au moins 23,0 % en volume, mais moins de 40,0 % en volume de PVDF et 8,0 à 25,0 % en volume de sulfure métallique avec une structure en couches en tant que charge, et **en ce que** le rapport de la proportion en pourcentage en volume de PVDF à la proportion en pourcentage en volume du sulfure métallique est compris entre 1,0 et 4,0.

2. Matériau composite pour palier lisse selon la revendication 1, **caractérisé en ce que** le matériau de couche de glissement (8) comprend au moins 52,0 % en volume, en particulier au moins 54,0 % en volume, en particulier 70 % en volume tout au plus, en particulier 65 % en volume tout au plus, en particulier tout au plus 62 % en volume de PTFE.

3. Matériau composite pour palier lisse selon la revendication 1 ou 2, **caractérisé en ce que** le matériau de couche de glissement (8) comprend 39,0 % en volume tout au plus, en particulier 38,0 % en volume tout au plus, en particulier 37,0 % en volume tout au plus, en particulier tout au plus 36,0 % en volume de PVDF.

4. Matériau composite pour palier lisse selon la revendication 1, 2 ou 3, **caractérisé en ce que** le matériau de couche de glissement (8) comprend au moins 9 % en volume, en particulier au moins 12 % en volume, en particulier 23 % en volume tout au plus, en particulier 21 % en volume tout au plus de sulfure métallique avec une structure en couche en tant que charge.

5. Matériau composite pour palier lisse selon une ou plusieurs des revendications précédentes, **caractérisé en ce que** le rapport de la proportion en pourcentage en volume de PVDF à la proportion en pourcentage en volume du sulfure métallique est au moins égal à 1,1, en particulier au moins égal à 1,2, et en particulier au plus égal à 3,8, en particulier au plus égal à 3,6.

6. Matériau composite pour palier lisse selon une ou plusieurs des revendications précédentes, **caractérisé en ce que** le sulfure métallique comprend le disulfure de molybdène (MoS₂), le disulfure de tungstène (WS₂), le disulfure d'étain (SnS₂), et le sulfure de bismuth (Bi₂S₃) .

7. Matériau composite pour palier lisse selon une ou plusieurs des revendications précédentes, **caractérisé en ce que** le matériau de couche de glissement (8) comprend, outre le sulfure métallique, au total au moins 0,2 % en volume, en particulier au moins 0,5 % en volume, en particulier au moins 1,0 % en volume, en particulier au moins 2 % en volume, en particulier 10 % en volume tout au plus, en particulier 8 % en volume tout au plus, en particulier 5 % en volume tout au plus d'autres charges tribologiquement actives.

8. Matériau composite pour palier lisse selon la revendication 7, **caractérisé en ce que** les autres charges tribologiquement actives comprises sont le sulfate de baryum (BaSO₄) et/ou des pigments, tels que le TiO₂, et/ou du nitrure de bore hexagonal (BN), du difluorure de calcium (CaF₂), de l'aramide et du polyimide (PI), et/ou des fibres, en particulier des fibres de carbone.

9. Matériau composite pour palier lisse selon une ou plusieurs des revendications précédentes, **caractérisé en ce que** le matériau de couche de glissement (8) est constitué des composants PTFE, PVDF, sulfure métallique, en particulier le MoS₂, ou **en ce que** le matériau de couche de glissement (8) est constitué des composants PTFE, PVDF, sulfure métallique, en particulier le MoS₂, et 10 % en volume tout au plus, en particulier 8 % en volume tout au plus, en particulier 6 % en volume tout au plus d'autres charges tribologiquement actives selon la revendication 8.

10. Matériau composite pour palier lisse selon une ou plusieurs des revendications précédentes, **caractérisé en ce que** la saillie (12) du matériau de couche de glissement (8) sur la couche porteuse poreuse (6), laquelle forme la surface de glissement, présente une épaisseur d'au moins 5 µm, en particulier d'au moins 10 µm, en particulier d'au moins 15 µm, en particulier d'au moins 20 µm, et de 60 µm tout au plus, en particulier de 50 µm tout au plus, en particulier de 45 µm tout au plus.

11. Élément de palier lisse, en particulier douille roulée ou douille à collerette, en particulier en tant qu'élément de palier lisse dans un dispositif de réglage de siège d'un véhicule automobile, réalisé à partir d'un matériau composite pour palier lisse (2) selon une ou plusieurs des revendications 1 à 10.

12. Ensemble de palier lisse comprenant un élément de palier lisse en forme de douille ou en forme de douille à collerette selon la revendication 11 et un élément métallique d'arbre ou de tourillon monté dans celui-ci avec une rugosité de surface R_{z} comprise entre 0,5 et 4,0 µm, en particulier entre 1,0 et 3,0 µm, en particulier entre 1,0 et 2,0 µm.
